# EUROPÄISCHE PATENTSCHRIFT

(11) **EP 3 058 240 B1**
(45) Veröffentlichungstag und Bekanntmachung des Hinweises auf die Patenterteilung: **11.10.2017**
(21) Anmeldenummer: 14758325.6
(22) Anmeldetag: 26.08.2014
(51) Int. Cl.: F16D 11/14

(54) **KUPPLUNGSSENSORSYSTEM**
CLUTCH SENSOR SYSTEM
SYSTÈME DE DÉTECTION D'ACCOUPLEMENT

(30) Priorität: 17.10.2013 DE 102013221056
(43) Veröffentlichungstag der Anmeldung: 24.08.2016
(73) Patentinhaber: Robert Bosch GmbH, 70442 Stuttgart (DE)
(72) Erfinder: KAESS, Udo, 74399 Walheim (DE); DROIGK, Thorsten, 71640 Ludwigsburg (DE); WEIBERLE, Peter, 74343 Sachsenheim (DE); KUKAWKA, Olivier, 71636 Ludwigsburg (DE)
(86) Internationale Anmeldenummer: PCT/EP2014/068033
(87) Internationale Veröffentlichungsnummer: WO 2015/055339

(56) Entgegenhaltungen:
- EP-A1- 2 431 714
- DE-A1-102010 031 976
- DE-A1-102011 010 153

## Beschreibung

### Stand der Technik

Die Erfindung betrifft ein Kupplungssensorsystem mit einem um eine Drehachse drehbeweglichen und in Richtung der Drehachse axial verschiebbaren Kupplungsteil und einer Sensoreinrichtung. Derartige Kupplungssensorsysteme werden beispielsweise in Automatikgetrieben von Kraftfahrzeugen eingesetzt, um den Kupplungszustand beispielsweise einer Klauenkupplung des Getriebes zu überwachen. Die bekannten Systeme verwenden zwei unterschiedliche Sensoreinrichtungen, wobei eine erste Sensoreinrichtung die Drehbewegung eines drehbeweglichen Kupplungsteils erfasst. Dabei kann es sich beispielsweise um einen gewöhnlichen Drehzahlsensor handeln, z.B. einen Differenzialhallsensor. Ein drehbewegliches Kupplungsteil ist zu diesem Zweck an seinem Umfang beispielsweise mit einer umlaufenden Zahnradstruktur versehen, die in Umlaufrichtung alternierend aufeinanderfolgende Zähne und Zahnlücken aufweist, die durch Übergänge getrennt sind. Bei einer Drehung des drehbeweglichen Kupplungsteils werden die jeweiligen Übergänge von Zahn zu Zahnlücke an einem Erfassungsbereich des Sensorelements der Sensoreinrichtung vorbeigeführt. Das Sensorelement bildet in Abhängigkeit von der Erfassung der Übergänge ein die Drehbewegungsgröße repräsentierendes Drehzahlsignal. Die axiale Verschiebungslage des Kupplungsteils wird bei bekannten Lösungen über eine separate Sensoreinrichtung, beispielsweise einen Wegsensor erfasst. Die bekannten Systeme erfordern unterschiedliche Geberstrukturen und Sensoreinrichtungen. Zudem ist für die Anordnung an der Kupplung relativ viel Bauraum erforderlich, da das Drehzahlsignal und das die axiale Verschiebungslage repräsentierende Wegsignal an getrennten Orten erfasst werden.

### Offenbarung der Erfindung

### Vorteile der Erfindung

Das erfindungsgemäße Kupplungssensorsystem mit den Merkmalen des Anspruchs 1 weist den Vorteil auf, dass eine Drehbewegungsgröße wie beispielsweise die Drehzahl und die axiale Verschiebungslage eines Kupplungsteils in vereinfachter Weise erfasst werden kann. Zu diesem Zweck weist das Kupplungssensorsystem eine spezielle Geberstruktur mit wenigstens zwei Teilstrukturen auf, welche so ausgebildet sind, dass der Umfangsabstand eines von der Sensoreinrichtung bei einer Drehbewegung des drehbeweglichen Kupplungsteils erfassten Strukturübergangs von einem in Umlaufrichtung des drehbeweglichen Kupplungsteils unmittelbar oder mittelbar nachfolgenden, von der Sensoreinrichtung erfassten Strukturübergang abhängig von der axialen Verschiebung des drehbeweglichen Kupplungsteils ist, so dass die Sensoreinrichtung ein Sensorsignal erzeugt, das zusätzlich zu der Information über die Drehbewegungsgröße des drehbeweglichen Kupplungsteils eine Information über die axiale Verschiebungslage des Kupplungsteils enthält. Vorteilhaft kann der Verkabelungsaufwand und der Bauraum verringert werden, wobei das Kupplungssensorsystem die Drehbewegungsgröße und die axiale Verschiebungslage des drehbeweglichen Kupplungsteils zuverlässig detektiert und daher eine präzise Kupplungsansteuerung ermöglicht.

Vorteilhafte Ausgestaltungen und Weiterbildungen der Erfindung werden durch die in den abhängigen Ansprüchen aufgeführten Merkmale ermöglicht.

Grundsätzlich sind die unterschiedlichsten Ausführungen der Geberstruktur möglich. Besonders vorteilhaft ist es jedoch, wenn die Geberstruktur mit Strukturelementen von alternierend aufeinanderfolgenden Teilstrukturen so ausgestaltet ist, dass wenigstens ein Strukturübergang einen gegenüber der Drehachse des drehbeweglichen Kupplungsteils schräg gestellten Schrägstellungsabschnitt aufweist und ein in Umlaufrichtung unmittelbar oder mittelbar nachfolgender Strukturübergang einen zu dem Schrägstellungsabschnitt nicht parallel verlaufenden Abschnitt aufweist. Dadurch wird in einfacher Weise erreicht, dass der von der Sensoreinrichtung abgetastete Umfangsabstand zumindest dieser beiden Strukturübergänge abhängig von der axialen Verschiebungslage des Kupplungsteils ist. Dabei sind Ausführungsformen möglich, bei denen die Geberstruktur nur einen Schrägstellungsabschnitt an nur einem einzigen Strukturelement aufweist oder an mehreren aber nicht allen Strukturelementen einen Schrägstellungsabschnitt aufweist oder auch an allen Strukturelementen jeweils einen Schrägstellungsabschnitt aufweist.

Die erste Teilstruktur und/oder die zweite Teilstruktur können beispielsweise aus einer Folge von gleichartig ausgebildeten Strukturelementen bestehen. So kann die Geberstruktur beispielsweise eine Anordnung von in Umlaufrichtung gesehen alternierend aufeinanderfolgenden, zackenartigen Strukturelementen aufweisen. Es ist aber auch möglich, dass die erste Teilstruktur und/oder die zweite Teilstruktur aus einer Folge von unterschiedlich ausgebildeten und in Umlaufrichtung alternierend angeordneten Strukturelementen gebildet wird.

Die Sensoreinrichtung kann in einem Ausführungsbeispiel nur ein einziges Sensorelement aufweisen. Es ist aber auch möglich, dass die Sensoreinrichtung zwei oder mehr in Richtung der Drehachse beabstandet voneinander angeordnete Sensorelemente aufweist, die baulich getrennt voneinander oder auch zu einer Baueinheit vereint sind. Die Sensoreinrichtung weist beispielsweise wenigstens ein oder zwei Sensorelemente der folgenden Sensortypen auf: Differenzialhallsensor, Hallsensor oder Hall-IC, induktives Sensorelement, AMR-Sensor (Anisotrop Magneto Resistive Sensor), GMR-Sensor (Giant Magneto Resistance Senor), optischer Sensor, Ultraschallsensor oder Radar-Sensor, wobei diese Auflistung nicht abschließend ist. In der Drückschrift DE102010031976A1 wird ein Hallsensoreinrichtung offenbart.

Die Sensoreinrichtung erzeugt vorteilhaft ein Sensorsignal, das in Abhängigkeit von der Erfassung der vorbeigeführten Strukturübergänge eine Folge von Signalpulsen aufweist. Das Sensorsignal kann ein von der Sensoreinrichtung erfasstes Signal oder ein von der Sensoreinrichtung weiterverarbeitetes und am Ausgang bereitgestelltes Signal sein.

In einem vorteilhaften Ausführungsbeispiel enthält das Sensorsignal beispielsweise eine Sequenz von wenigstens drei aufeinanderfolgenden Signalpulsen aus einem ersten Signalpuls, einem zweiten Signalpuls und einem dritten Signalpuls, wobei das Verhältnis des zeitlichen Abstandes des ersten Signalpulses von dem zweiten Signalpuls und des zeitlichen Abstandes des zweiten Signalpulses von dem dritten Signalpuls eine Information über die axiale Verschiebungslage des drehbeweglichen Kupplungsteils enthält.

In einem anderen vorteilhaften Ausführungsbeispiel kann aber beispielsweise auch vorgesehen sein, dass das Verhältnis der Pulsdauer eines Signalpulses des Sensorsignals zur Periodendauer des Sensorsignals eine Information über die axiale Verschiebungslage des drehbeweglichen Kupplungsteils enthält beziehungsweise die axiale Verschiebungslage repräsentiert.

Vorteilhaft kann in Abhängigkeit von der Anzahl der in einem vorgebbaren Zeitintervall erfassten Signalpulse oder in Abhängigkeit vom zeitlichen Abstand der Signalpulse ein die Drehbewegungsgröße repräsentierender Wert erfasst werden.

In einer vorteilhaften Ausführung werden die in Umlaufrichtung alternierend aufeinanderfolgenden Strukturelemente durch eine geometrische Gestaltung des Umfangs des drehbeweglichen Kupplungsteils in der Art einer Zahnradgeometrie gebildet, wobei die erste Teilstruktur Zähne als Strukturelemente und die zweite Teilstruktur jeweils zwischen zwei Zähnen befindliche Zahnlücken als Strukturelemente aufweist. Die Zahnlücken können besonders einfach durch Fräsen hergestellt werden, wodurch auch die weiter oben bereits beschriebenen Schrägstellungsabschnitte in einfacher Weise erzeugt werden können. In Kombination mit der Zahnradgeometrie kann vorteilhaft ein magnetfeldempfindliches Sensorelement verwandt werden, wobei beispielsweise im Sensor-Erfassungsbereich des wenigstens einen Sensorelementes ein Magnetfeld erzeugt wird und die Sensoreinrichtung eine Magnetfeldänderung erfasst, wenn Zähne und Zahnlücken an dem Sensor-Erfassungsbereich des wenigstens einen Sensorelementes der Sensoreinrichtung vorbeigeführt werden. Das Sensorelement kann in diesem Fall beispielsweise vorteilhaft als Differenzialhallsensor ausgebildet sein.

In einem weiteren Ausführungsbeispiel ist vorgesehen, dass die in Umlaufrichtung alternierend aufeinanderfolgenden Strukturelemente durch eine magnetische Polstruktur am Umfang des drehbeweglichen Kupplungsteils ausgebildet werden (Polrad), wobei die Strukturübergänge zwischen der ersten und der zweiten Teilstruktur durch magnetische Nord-Süd-Übergänge gebildet werden. Die Sensoreinrichtung erfasst in diesem Fall eine Magnetfeldänderung, wenn ein magnetischer Nord-Süd-Übergang an dem Sensor-Erfassungsbereich des wenigstens einen Sensorelementes vorbeigeführt wird. Magnetisch aktive Geberstrukturen in Form von Polrädern sind problemlos herstellbar.

Eine weitere Ausführungsform sieht vor, dass die in Umlaufrichtung alternierend aufeinanderfolgenden Strukturelemente durch eine Gestaltung der optischen Oberflächenbeschaffenheit des Umfangs des drehbeweglichen Teils ausgeführt sind, wobei die erste Teilstruktur und die zweite Teilstruktur eine optisch unterschiedliche Oberfläche aufweisen. Die Sensoreinrichtung ist in diesem Fall beispielsweise ein optisches Sensorelement, das im Sensor-Erfassungsbereich von der Oberfläche reflektierte elektromagnetische Strahlung, insbesondere Licht, erfassen kann. Vorteilhaft ist hierfür keine geometrische Gestaltung des Umfangs des Kupplungsteils erforderlich, sondern nur eine geeignete Oberflächenbearbeitung, beispielsweise durch Aufrauen oder Sandstrahlen der Oberfläche oder einen Farbaufstrich, was ohne großen Aufwand durchführbar ist.

Das Kupplungssensorsystem kann vorzugweise Teil einer Kraftfahrzeuggetriebekupplung oder Teil einer die Antriebsseite mit der Abtriebsseite verbindenden Trennkupplung eines Kraftfahrzeuges sein, ohne auf diese Anwendungen beschränkt zu sein.

Im Kontext der vorliegenden Anmeldung ist eine Kupplung eine Vorrichtung zur Übertragung eines Drehmomentes bei der wenigstens ein drehbewegliches und axial verschiebbares Kupplungsglied lösbar mit einem zweiten Kupplungsglied in Eingriff und damit in Wirkverbindung gebracht wird. Die Kupplung kann beispielsweise eine Klauenkupplung eine Fahrzeuggetriebes sein. Es kann sich aber auch um eine andere Kupplung, beispielsweise eine Membranfederkupplung oder ähnliches handeln.

Unter einem drehbeweglichen Kupplungsteil wird irgendein Teil einer mehrteiligen Kupplung verstanden, das mit wenigstens einem für den Eingriff der Kupplung benötigten rotierenden und axial versschiebbaren Kupplungsglied der Kupplung entweder drehfest gekoppelt ist oder erst während des Kuppelvorgangs gekoppelt wird oder aber dieses Kupplungsglied selbst darstellt.

Unter einem Umfang des Kupplungsteils wird die umlaufende Seite des Kupplungsteils in senkrechter Blickrichtung zur Drehachse verstanden. Dies kann beispielsweise eine zylindermantelförmige Geometrie sein. Für die Erfindung ist die Ausbildung der Geberstruktur auf dem Umfang des Kupplungsteils maßgeblich. Es kommt nicht auf die Ausbildung des Umfangs des Kupplungsteils außerhalb der Geberstruktur an.

Unter der Umlaufrichtung ist die Rotationsrichtung in oder auch entgegen der Drehung des Kupplungsteils zu verstehen.

Unter einem Umfangsabstand im Kontext der Anmeldung wird der räumliche Abstand zweier Punkte auf einer gedachten Abrollkurve der Geberstruktur des drehbeweglichen Teils in einer Ebene verstanden.

Unter einem Sensor-Erfassungsbereich wird ein flächenhafter oder räumlich ausgedehnter, zwei- oder dreidimensionaler Bereich zwischen demjenigen Bereich des Umfangs des Kupplungsteils, welcher dem Sensorelement zugewandt ist, und dem Sensorelement verstanden. Das Sensorelement erfasst Strukturübergänge und daher Strukturänderungen der Geberstruktur, wenn diese den Sensor-Erfassungsbereich passieren.

Die Geberstruktur im Kontext der vorliegenden Anmeldung kann vorzugsweise durch räumliche beziehungsweise geometrische Gestaltung des Umfangs des drehbeweglichen Teils oder durch über den Umfang verteilte magnetische Pole oder durch optische Gestaltung der Oberfläche am Umfang des drehbeweglichen Teils dargestellt werden, ohne darauf eingeschränkt zu sein.

Unter einem Strukturübergang wird in Umlaufrichtung gesehen der Übergang zwischen jeweils zwei benachbarten Strukturelementen verstanden. Der Strukturübergang kann die Form einer Linie, einer Kante, eines Magnetpolübergangs oder ähnlichem aufweisen. Es kann sich auch um einen in der Umlaufrichtung etwas ausgedehnten Bereich, beispielsweise einen stetigen Übergangsbereich handeln.

Unter einem in Umlaufrichtung einem betrachteten Strukturübergang unmittelbar nachfolgendem Strukturübergang wird in Umlaufrichtung gesehen der nächste von der Sensoreinrichtung erfasste Strukturübergang verstanden.

Unter einem in Umlaufrichtung einem betrachteten Strukturübergang mittelbar nachfolgenden Strukturübergang wird ein Strukturübergang verstanden, welcher nicht der nächst erfasste Strukturübergang ist und welcher in Umlaufrichtung gesehen durch weitere Strukturübergänge von dem zuerst erfassten getrennt sein kann.

Unter der ersten und der zweiten Teilstruktur der Geberstruktur werden zwei Teilstrukturen der Geberstruktur verstanden, wobei die Geberstruktur nicht auf Unterteilungen in zwei Teilstrukturen beschränkt zu sein braucht und beispielsweise zusätzlich auch eine dritte, vierte oder mehr Teilstrukturen aufweisen kann.

Unter einer Information über die axiale Verschiebungslage des Kupplungsteils wird eine Information verstanden, welche es ermöglicht, die relative oder absolute axiale

Verschiebungslage des Kupplungsteils bei einer im Betrieb auftretenden Verschiebung in Richtung der Drehachse zuverlässig zu berechnen.

### Kurze Beschreibung der Zeichnungen

Ausführungsbeispiele der Erfindung sind in der Zeichnung dargestellt und werden in der nachfolgenden Beschreibung näher erläutert. Es zeigen
Fig. 1 einen Prinzipaufbau des Kupplungssensorsystems,
Fig. 2 eine schematische Darstellung einer Draufsicht auf ein Ausführungsbeispiel der Geberstruktur in der Blickrichtung vom Sensorelement auf die Geberstruktur,
Fig. 3a ein Beispiel für das von dem Sensorelement erzeugte Signal, wenn der Sensor-Erfassungsbereich bei einer Drehbewegung des drehbeweglichen Teils die Spur S1 in Fig. 2 überstreicht,
Fig. 3b ein Beispiel für das von dem Sensorelement erzeugte Signal, wenn der Sensor-Erfassungsbereich bei einer Drehbewegung des drehbeweglichen Teils die Spur S2 in Fig. 2 überstreicht,
Fig. 4 und Fig. 5 alternative Ausführungsbeispiele der Geberstruktur,
Fig. 6 einen Querschnitt durch ein Ausführungsbeispiel der Geberstruktur von Fig. 2 für den Sonderfall einer räumlichen beziehungsweise geometrisch strukturieren Geberstruktur,
Fig. 7 eine Darstellung von Geberstruktur und korrespondierendem Sensorsignal für ein weiteres Ausführungsbeispiel der Erfindung,
Fig. 8 und Fig. 9 weitere Ausführungsbeispiele der erfindungsgemäßen Geberstrukur.

### Ausführungsformen der Erfindung

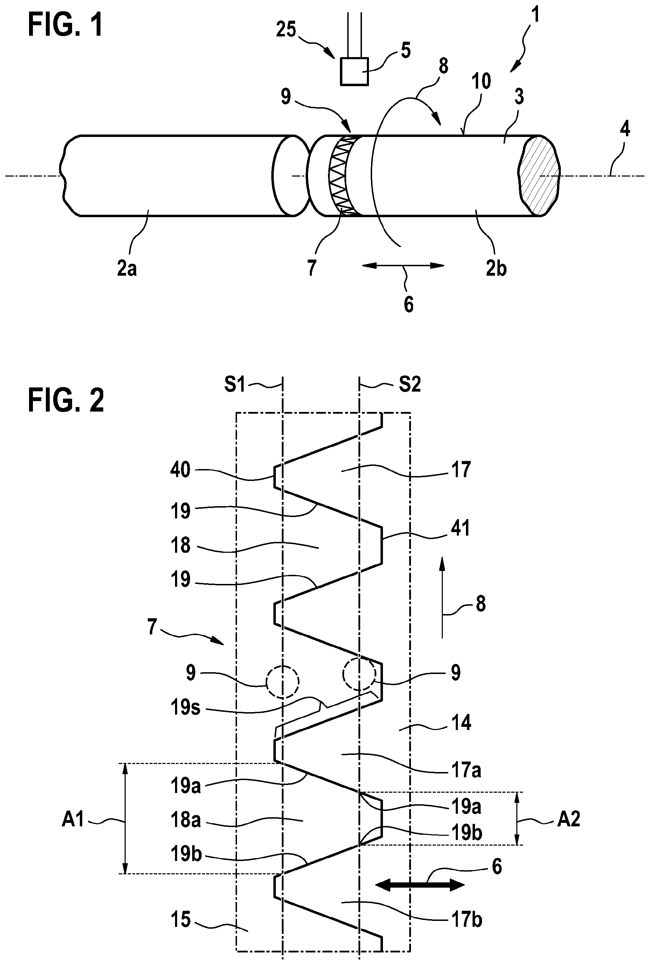

Fig. 1 zeigt den prinzipiellen und stark vereinfachten Aufbau eines Kupplungssensorsystems 1. Das Kupplungssensorsystem 1 umfasst eine Kupplung mit wenigstens zwei Kupplungsgliedern 2a und 2b, zwischen denen ein Drehmoment durch Herstellung eines Kupplungsschlusses übertragbar ist. Zu diesem Zweck können die Kupplungsglieder 2 und 3 miteinander in Eingriff gebracht werden, wobei der Eingriff reibschlüssig, formschlüssig, kraftschlüssig oder anders erfolgen kann. Durch Schließen der Kupplung kann ein Drehmoment von dem beispielsweise mit der Kupplungseingangsseite gekoppelten Kupplungsglied 2a auf das beispielsweise mit der Kupplungsausgangsseite gekoppelte Kupplungsglied 2b oder umgekehrt übertragen werden. Das erste und zweite Kupplungsglied kann in oder entgegen der dargestellten Umlaufrichtung 8 drehbeweglich ausgebildet sein, wobei wenigstens eines der Kupplungslieder, beispielsweise das Kupplungsglied 2b, in axialen Richtung 6 verschiebbar ist. Bei der Kupplung handelt es sich beispielsweise um eine Klauenkupplung eines Kraftfahrzeuggetriebes.

Das Kupplungsglied 2b ist mit einem Kupplungsteil 3 mechanisch verbunden. Das Kupplungsteil 3 ist daher wie das Kupplungsglied 2b drehbeweglich auf der Drehachse 4 angeordnet und in Richtung der Drehachse 4 verschiebbar angeordnet. In Fig. 1 bildet das Kupplungsteil 3 das zweite Kupplungsglied 2b. Es ist aber auch möglich, dass das Kupplungsteil 3 durch ein separates Teil gebildet wird, das erst nachträglich mit dem Kupplungsglied 2b verbunden wird. Wichtig ist, dass die Drehbewegung des Kupplungsteils 3 in der Umlaufrichtung 8 und die axiale Verschiebung 6 des Kupplungsteils 3 mit derjenigen des Kupplungsglieds 2b gekoppelt ist, um den Kupplungszustand des Kupplungssensorsystems 1 mittels einer Sensoreinrichtung 25 erfassen zu können.

Zu diesem Zweck ist das Kupplungsteil 3 an seinem Umfang 10, der in Fig. 1 einfach als Zylindermantelfläche dargestellt ist, mit einer in Umlaufrichtung 8 gesehen umlaufenden Geberstruktur 7 versehen. Die Geberstruktur 7 ist in Fig. 1 nur angedeutet. Die Sensoreinrichtung 25 weist beispielsweise ein Sensorelement 5 auf, das sich in einem radialen Abstand zu dem Umfang 10 der Geberstruktur 7 befindet und vorzugsweise direkt senkrecht auf die Geberstruktur 7 blickt. Der von dem Sensorelement abgetastete Bereich der Geberstruktur 7 beziehungsweise der Bereich zwischen der Geberstruktur 7 und dem Sensorelement 5 bildet einen Sensor-Erfassungsbereich 9. Der Sensor-Erfassungsbereich 9 kann deutlich kleiner als die Geberstruktur 7 sein.

In Fig. 2 ist ein Beispiel für die Geberstruktur 7 dargestellt. Fig. 2 zeigt dabei schematisch einen Teil einer Abrollkurve der umlaufenden Geberstruktur 7 aus Fig. 1 in der Ebene. Die Umlaufrichtung 8 befindet sich daher in der Ebene der Darstellung von Fig. 2 und wurde entsprechend eingezeichnet. Der Pfeil 6 markiert die axiale Verschiebung der Geberstruktur 7 im Verhältnis zu der Sensoreinrichtung 25 beziehungsweise dem Sensor-Erfassungsbereich 9. Die Geberstruktur 7 sind hier beispielsweise durch in Umlaufrichtung 8 gesehen alternierend aufeinanderfolgende zackenartige Strukturelemente gebildet, die mit ihren Spitzen in Fig. 2 wechselseitig nach rechts und links weisen.

Wie in Fig. 2 gut zu erkennen ist, umfasst die Geberstruktur 7 eine erste Teilstruktur 14 und eine zweite Teilstruktur 15. In den hier dargestellten Ausführungsbeispielen finden sich Ausführungsformen mit zwei Teilstrukturen der Geberstruktur 7. Es versteht sich, dass auch Ausführungsbeispiele möglich sind, welche aus drei, vier oder mehr Teilstrukturen gebildet werden.

Die erste und die zweite Teilstruktur 14, 15 weisen periodisch angeordnete Strukturelemente 17, 18 auf, welche in Fig. 2 beispielsweise zackenartig ausgebildet sind. Die Strukturelemente der ersten Teilstruktur 14 wurden mit dem Bezugszeichen 17 versehen, die der zweiten Teilstruktur 15 mit dem Bezugszeichen 18. Man erkennt, dass die Strukturelemente 17 der ersten Teilstruktur 14 in diesem Ausführungsbeispiel alle gleichartig ausgebildet sind. Ebenso sind beispielsweise die Strukturelemente 18 der zweiten Teilstruktur 15 alle gleichartig ausgebildet. Die Strukturelemente der ersten Teilstruktur 14 und die Strukturelemente 18 der zweiten Teilstruktur 15 folgen in der Umlaufrichtung 8 gesehen alternierend aufeinander, so dass die erste Teilstruktur 14 und die zweite Teilstruktur 15 sich beispielsweise wie zwei ineinander greifende Kämme verhalten.

Zwischen den Strukturelementen 17 der ersten Teilstruktur 14 und den Strukturelementen 18 der zweiten Teilstruktur 15 befindet sich jeweils ein Strukturübergang 19. Der Strukturübergang kann die Form einer Linie, einer Kante, eines Magnetpolübergangs oder ähnlichem aufweisen. Es kann sich auch um einen in der Umlaufrichtung 8 etwas ausgedehnten Bereich, beispielsweise um einen stetigen Übergangsbereich handeln. Wichtig ist, dass das die Sensoreinrichtung 25 beziehungsweise das Sensorelement 9 erfasst, wenn ein Strukturübergang 19 den Sensor-Erfassungsbereich 9 passiert. Wie dies erreicht werden kann, wird weiter unten noch genauer erläutert. Jedes Strukturelement in Fig. 2 weist zwei Strukturübergänge zu benachbarten Strukturelementen auf. Beispielsweise weist ein in Fig. 2 mit 18a bezeichnetes erstes Strukturelement der zweiten Teilstruktur 15 einen Strukturübergang 19a zu einem ersten Strukturelement 17a der ersten Teilstruktur 14 und einen Strukturübergang 19b zu einem zweiten Strukturelement 17b der ersten Teilstruktur 14 auf.

Das Sensorelement 5 tastet die Geberstruktur entlang einer Bahn oder Spur ab, welche von der axialen Verschiebung 6 des Kupplungsteils 3 abhängt. Die Spuren S1, S2 sind in Fig. 2 gestrichelt dargestellt. In einer ersten Verschiebungslage tastet, das Sensorelement 5 beispielsweise die Geberstruktur 7 entlang der Spur S1 ab. Wird das Kupplungsteil 3 dann in Fig. 2 entlang der axialen Verschiebung 6 in Fig. 2 nach links verschoben, so tastet das Sensorelement 5 nunmehr die Geberstruktur 7 entlang der Spur S2 ab. Bei einer Drehung des Kupplungsteils 3 und daher auch der Geberstruktur 7 um die Drehachse 4 wandert der Sensorerfassungsbereich 9 des Sensorelementes 5 entlang der Spur S1 oder S2 in Umlaufrichtung 8 über die Strukturelemente 17 und 18 und tastet deren Strukturübergänge 19 ab.

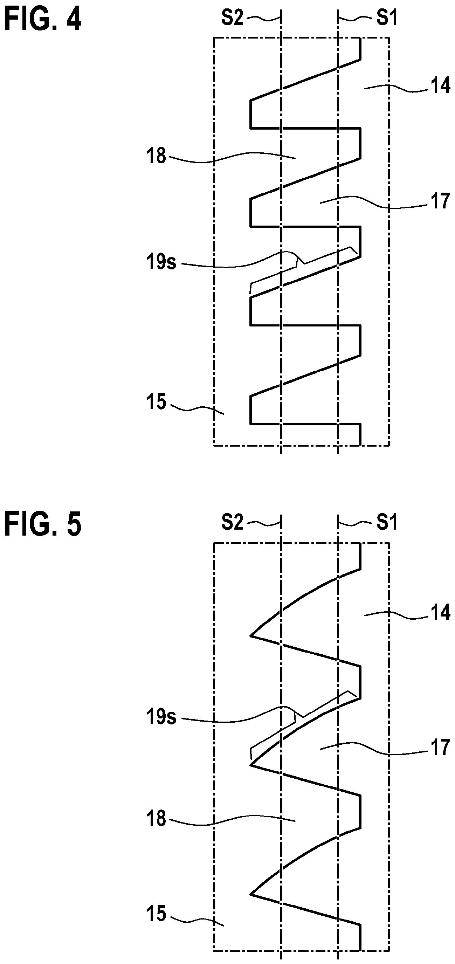

Erfindungsgemäß ist die Geberstruktur so ausgelegt, dass der Umfangsabstand A1, A2 eines bei einer Drehbewegung des drehbeweglichen Kupplungsteils 3 von dem Sensorelement 5 erfassten Strukturübergangs 19 von einem unmittelbar oder mittelbar nachfolgend erfassten Strukturübergang von der axialen Verschiebung 6 des Kupplungsteils abhängt. Dies kann beispielsweise dadurch erreicht werden, dass das die Strukturübergänge 19 von einem Strukturelement zum nächsten Strukturelement einen Schrägstellungsabschnitt 19s aufweisen, der gegenüber der Drehachse 4 und damit auch gegenüber der Richtung der axialen Verschiebung 6 schräg gestellt ist. Jedes Strukturelement einer Teilstruktur in Fig. 2 weist zwei Strukturübergänge zu benachbarten Strukturelementen der anderen Teilstruktur auf. Es ist möglich, dass jeder der beiden Strukturübergänge einen Schrägstellungsabschnitt 19s aufweist, wie dies in Fig. 2 dargestellt ist. Möglich ist aber auch, dass nur einer der beiden Strukturübergang einen Schrägstellungsabschnitt 19s aufweist und dass der andere Strukturübergang nicht parallel zu dem Schrägstellungsabschnitt 19s verläuft. Ein alternatives Ausführungsbeispiel einer Geberstruktur 7 ist in Fig. 4 gezeigt. Jedes Strukturelement in Fig. 4 weist einen ersten Strukturübergang mit einem Schrägstellungsabschnitt 19s auf. Der zweite Strukturübergang verläuft parallel zur Drehachse 4 und ist nicht schräggestellt. Ein weiteres Ausführungsbeispiel ist in Fig. 5 gezeigt. Hier ist der Strukturübergang 19 beispielsweise durch einen gleichmäßig gekrümmten Abschnitt gebildet, der dadurch den Schrägstellungsabschnitt 19s relativ zur Drehachse 4 ausbildet. Der andere Strukturübergang jedes Strukturelementes 17, 18 ist beispielsweise geradlinig ausgebildet und unter einem anderen Winkel zur Drehachse 4 schräggestellt.

In Fig. 2 ist für den Fall, dass das Sensorelement 5 bei einer Drehung der Geberstruktur 7 in der dargestellten Umlaufrichtung 8 die Spur S1 abtastet, erkennbar, dass der Sensor-Erfassungsbereich 9 entlang der Spur 1 nach unten wandert. Betrachtet wird nun beispielsweise das erste Strukturelement 18a der zweiten Teilstruktur 15. Das Sensorelement 5 erfasst beispielweise zunächst den Strukturübergang 19a zwischen einem ersten Strukturelement 17a der ersten Teilstruktur 14 und dem ersten Strukturelement 18a der zweiten Teilstruktur 15. Als nächsten Strukturübergang bei Drehung in der Umlaufrichtung 8 erfasst das Sensorelement 5 den Strukturübergang 19b zwischen dem ersten Strukturelement 18a der zweiten Teilstruktur 15 und einem zweiten Strukturelement 17b der ersten Teilstruktur 14. Der Umfangsabstand A1 zwischen den beiden Strukturübergängen 19a und 19b ist für das betrachtete erste Strukturelement 18a der zweiten Teilstruktur 15 abhängig von der Spur S1, denn wird das Kupplungsteil 3 mit der Geberstruktur in Fig. 2 nach links verschoben, so tastet das Sensorelement 5 nunmehr die Spur S2 ab. Dabei wird der Umfangsabstand A2 zwischen diesen beiden betrachteten Strukturübergängen 19a und 19b dieses ersten Strukturelementes 18a der zweiten Teilstruktur 15 deutlich kleiner. Die Veränderung des Umfangsabstandes der Strukturübergänge von A1 zu A2 ist auf die Schrägstellung der Strukturübergänge 19 zurückzuführen. Dies hat zur Folge, dass der Umfangsabstand A1 bzw. A2 von der axialen Verschiebelage der Geberstruktur 7 abhängt. Wie man erkennt, existiert in diesem Ausführungsbeispiel die Abhängigkeit nicht nur für das erste Strukturelement 18a der zweiten Teilstruktur 15, sondern ebenso für alle anderen Strukturelemente. Die Abhängigkeit des Umfangsabstandes von der axialen Verschiebung ist hier beispielswiese für alle Strukturelemente der Geberstruktur gewährleistet, wobei sich je nach betrachtetem Strukturelement der Umfangsabstand mal vergrößert und mal verkleinert.

Es versteht sich, dass es zur Erzielung dieser Abhängigkeit nur auf die Schrägstellung eines der beiden flankierenden Strukturübergänge eines Strukturelementes ankommt. Bei den in Fig. 4 oder Fig. 5 gezeigten Ausführungsbeispielen ist der Umfangsabstand zweier aufeinanderfolgend erfasster Strukturübergange ebenfalls von der axialen Verschiebung 6 abhängig. Wie bereits ausgeführt, muss nicht jedes Strukturelement über einen Schrägstellungsabschnitt verfügen. Im Grenzfall reicht ein einziger Schrägstellungsabschnitt an einem der Strukturelemente aus.

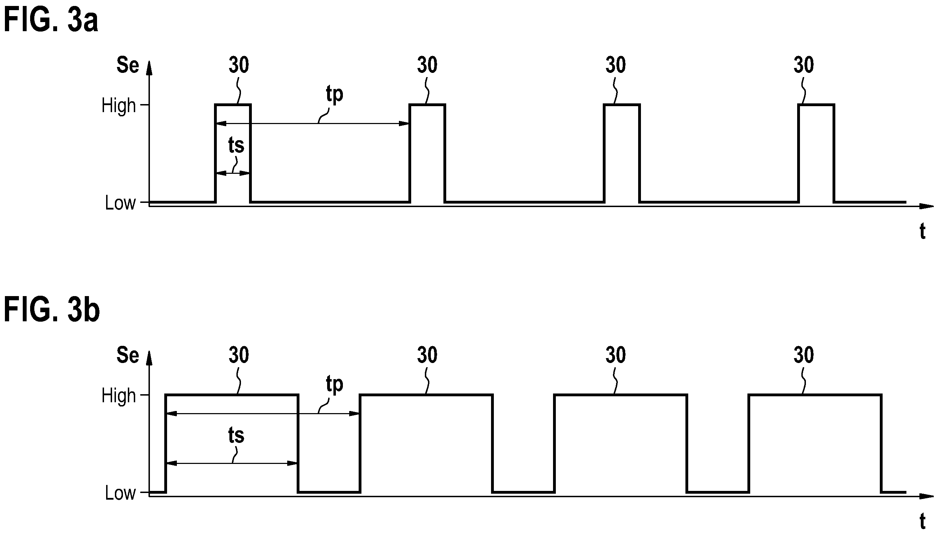

In Fig. 3a ist ein Beispiel eines Sensorsignals dargestellt, welches die Sensoreinrichtung 25 bei der Abtastung der Spur S1 erzeugt. Auf der horizontalen Achse ist die Zeit aufgetragen, auf der vertikalen Achse ist die Höhe des Sensorsignals aufgetragen, das beispielsweise ein Spannungssignal sein kann. Die Sensoreinrichtung 25 weist beispielsweise ein Sensorelement 5 auf, das als Differenzialhallsensor ausgebildet ist, der als sogenannter Peak-Detektor betrieben wird. Dieser spezielle Differenzialhallsensor, welcher beispielsweise von der Firma Allegro erhältlich ist, schaltet bei der Erfassung eines Strukturübergangs 19 einen Sensorpegel von High auf Low und umgekehrt. Das Sensorelement 5 erzeugt so beispielsweise ein binäres Sensorsignal Se, wobei das Sensorelement 5 bei einem erfassten Strukturübergang 19 einen Signalpegel von Low auf High schaltet und bei dem nächsten erfassten Strukturübergang 19 den Signalpegel von High auf Low zurückschaltet. Dadurch entsteht das in Fig. 3a gezeigte Sensorsignal mit Sensorpulsen 30.

Bei einer axialen Verschiebung der Geberstruktur 7 ändert sich das Signal und erzeugt bei einer Abtastung der Geberstruktur in der Spur S2 nunmehr das in Fig. 3b gezeigte Sensorsignal Se. In Fig. 3a und Fig. 3b ist erkennbar, dass die zeitliche Dauer eines High-Pegels 30 eine Pulsdauer ts definiert und dass das Verhältnis dieser Pulsdauer ts zur Periodendauer tp des Sensorsignals Se abhängig von der axialen Verschiebungslage der Geberstruktur 7 und des drehbeweglichen Kupplungsteils 3 ist. Es ist ebenfalls erkennbar, dass die Periodendauer tp unabhängig von der axialen Verschiebung 6 ist und dass in Abhängigkeit von der Anzahl oder dem Abstand der in einem vorgebbaren Zeitintervall erfassten Signalpulse 30 ein die Drehbewegungsgröße repräsentierender Wert erfasst werden kann. So kann aus der Kenntnis der Anzahl der Strukturelemente der Geberstruktur 7 beispielsweise in einfacher Weise direkt die Drehzahl des Kupplungsteils berechnet werden. Auf diese Weise erzeugt das hier vorgestellte Sensorelement 5 ein Sensorsignal Se, das zusätzlich zu der Drehbewegungsgröße des drehbeweglichen Kupplungsteils 3 die axiale Verschiebungslage des Kupplungsteils 3 repräsentiert.

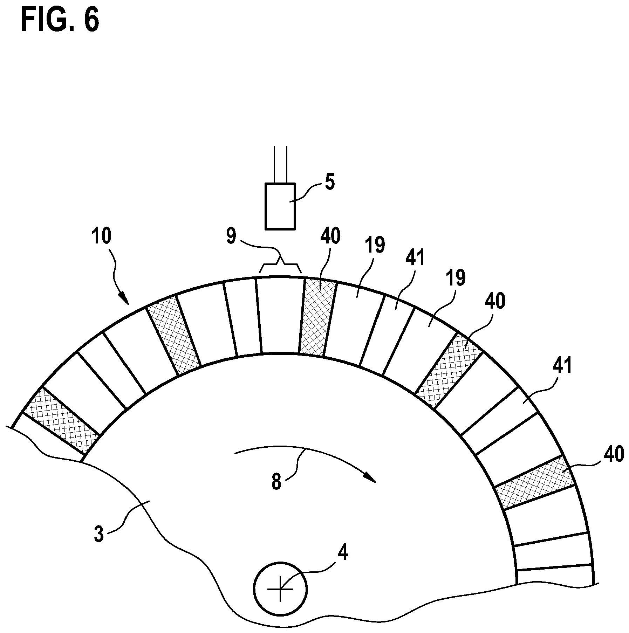

Die Signalerzeugung kann im Kontext der vorliegenden Anmeldung auf unterschiedlichen physikalischen Prinzipien beruhen. In einem vorteilhaften Ausführungsbeispiel wird die Geberstruktur durch eine geometrische Gestaltung des Umfangs 10 des Kupplungsteils 3 realisiert. Ein Querschnitt durch ein solches Kupplungsteil 3 ist in Fig. 6 für das in Fig. 2 dargestellte Ausführungsbeispiel gezeigt. Die Geberstruktur 7 wird hier in Form einer Folge von Zähnen 40 als erste Teilstruktur 14 gebildet, die durch Zahnlücken 41 als zweite Teilstruktur 15 getrennt sind. Die Flanken der Zähne sind gegenüber der Drehachse 4 schräggestellt, so dass die in Fig. 2 dargestellten schräggestellten Strukturübergänge 19 zwischen Zahn und Zahnlücke entstehen. Das Sensorelement 5 kann als einfaches Hallsensorelement, Hall-IC, Differenzialhallsensor oder induktives Sensorelement ausgestaltet sein. Ein nicht dargestellter Permanentmagnet, beispielsweise ein Back-Bias-Magnet, kann ein Magnetfeld im Sensor-Erfassungsbereich 9 erzeugen. Bei einer Drehung der Geberstruktur 7 wandern Zähne und Zahnlücken durch den Sensor-Erfassungsbereich 9, wodurch das Magnetfeld im Sensor-Erfassungsbereich periodisch modifiziert wird. Das Sensorelement 5 erfasst die Veränderung der magnetischen Feldstärke und schaltet beispielsweise bei Überschreiten eines im Sensorelement hinterlegten Schwellwertes. Dadurch schaltet der Sensor bei der Erfassung eines Strukturübergangs von Zahn zu Zahnlücke beziehungsweise von Zahnlücke zu Zahn und erzeugt so beispielsweise ein binäres Ausgangssignal.

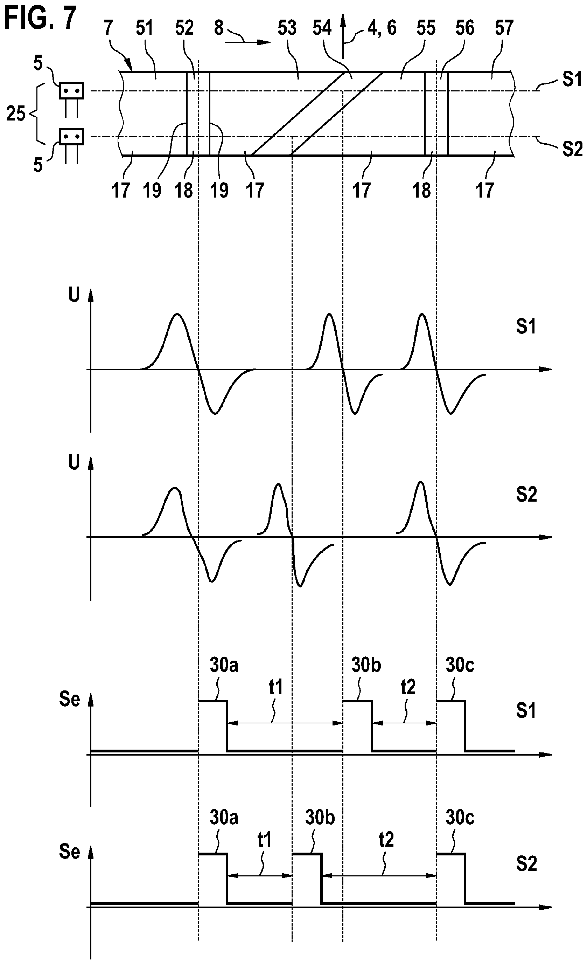

Ein besonders vorteilhaftes Ausführungsbeispiel der vorliegenden Erfindung ist in Fig. 7 dargestellt. Im oberen Teil von Fig. 7 ist die Geberstruktur 7 dieses Ausführungsbeispiels dargestellt. Das Kupplungsteil 3 ist beispielsweise ein ferromagnetisches Geberrad, in dessen Umfang 10 Zahnlücken 52, 54, 56 durch Fräsen eingebracht sind, so dass das Geberrad zwischen den Zahnlücken 52, 54, 56 befindliche Zähne 51, 53, 55 und 57 aufweist. Die im oberen Teil der Fig. 7 dargestellt Geberstruktur 7 setzt sich links und rechts periodisch entsprechend fort. Wie nun zu erkennen ist, bilden die Zahnlücken 52, 54, 56, beziehungsweise die eingefrästen Nuten die Strukturelement 18 der zweiten Teilstruktur 15 aus, während die Zähne 51, 53, 55 und 57 die Strukturelemente 17 der ersten Teilstruktur 14 ausbilden. Auch in diesem Ausführungsbeispiel weist die Geberstruktur 7 also in Umlaufrichtung 8 alternierend aufeinanderfolgende Strukturelemente 17, 18 einer ersten Teilstruktur 14 und einer zweiten Teilstruktur 15 auf. Im Unterschied zu dem in Fig. 2 dargestellten Ausführungsbeispiel sind hier aber die Strukturelemente 17 der ersten Teilstruktur 14 und ebenso die Strukturelemente 18 der zweiten Teilstruktur 15 nicht alle gleichartig ausgebildet. Wie in Fig. 7 zu erkennen ist, sind die Zahnlücken 52 und 56 der zweiten Teilstruktur parallel zur Achse 4 und daher auch parallel zur axialen Verschiebungsrichtung 6 ausgebildet, während die Zahnlücke 54 schräg zur Achse 4 in den Umfang des Geberrades eingefräst wurde. In Folge davon besteht die zweite Teilstruktur 15 aus einer alternierenden Folge von parallel und schräg zur Achse 4 orientierten Zahnlücken beziehungsweise Nuten. In Analogie zu den Zahnlücken besteht die erste Teilstruktur 14 aus einer im Umlaufrichtung 8 gesehen alternierenden Folge von zwei unterschiedlich ausgebildeten Zähnen 53, 55. So ist erkennbar, dass die Zähne 53 und 55 zueinander spiegelsymmetrisch ausgebildet sind. Der Zahn 57 entspricht wieder dem Zahn 53, während der Zahn 55 dem Zahn 51 entspricht. Ebenfalls gut erkennbar ist im oberen Teil von Fig. 7 ist, dass die Sensoreinrichtung 25 in diesem Ausführungsbeispiel in der Umlaufrichtung 8 gesehen immer zwei parallel zur Achse 4 verlaufende Strukturübergänge 19 gefolgt von zwei schräg zur Achse 4 verlaufenden Strukturübergängen 19 und dann wieder zwei parallel zur Achse 4 verlaufenden Strukturübergängen 19 aufweist.

Die in Fig. 7 dargestellte Sensoreinrichtung 25 kann in diesem Ausführungsbeispiel beispielsweise zwei in Richtung der Drehachse voneinander beabstandete Sensorelemente 5 umfassen, welche jeweils die Spuren S1 und S2 zeitgleich abtasten. Bei einer axialen Verschiebung 6 der Geberstruktur 7 ändern sich natürlich die jeweils abgetasteten Spuren S1, S2. Vorzugsweise sind die beiden Sensorelemente 5 jeweils als Differenzialhallsensoren ausgebildet. Die beiden Differenzialhallsensoren können getrennt voneinander oder zu einem Modul vereint sein. Bei einem Differenzialhallsensor wird ein Magnetfeld von einem Permanentmagneten erzeugt. Zwischen dem Magnet befinden sich zwei in Fig. 7 durch Punkte angedeutete Hallelemente, die in Umlaufrichtung 8 aufeinanderfolgen. Der magnetische Fluss, von dem diese durchsetzt werden, hängt davon ab, ob ein Zahn oder eine Zahnlücke den beiden Hallelementen gegenüberliegt. Durch Differenzbildung der beiden Signale der Hallelemente wird eine Reduzierung magnetischer Störsignale und ein verbessertes Signal-/Rauschverhältnis erreicht.

In der Mitte von Fig. 7 sind die Signale dargestellt, welche der erste Differenzialhallsensor in der Spur S1 und der zweite Differenzialhallsensor in der Spur S2 erfasst. Wenn beispielsweise der Strukturübergang von dem Zahn 51 und der Zahnlücke 52 von dem Differenzialhallsensor in der Spur S1 erfasst wird, erzeugt der Differenzialhallsensor positive Spannungswerte. Bei dem anschließend erfassten Strukturübergang von der Zahnlücke 52 zu dem Zahn 53 entsteht aufgrund der Differenzbildung ein negativer Spannungswert in dem Differenzialhallsensor.

Der Differenzialhallsensor erzeugt in Abhängigkeit von diesem erfassten Spannungssignal beispielsweise das im unteren Teil der Fig. 7 dargestellte Sensorsignal Se, welche aus einer Folge von beispielsweise rechteckförmigen Signalpulsen bestehen kann. Der erste Signalpuls 30a entsteht beim Durchlauf der die Zahnlücke 52 flankierenden Strukturübergänge 19 durch den Erfassungsbereich des Differenzialhallsensors, der nächste Signalpuls 30b beim Durchlauf der die Zahnlücke 54 flankierenden Strukturübergänge und der dritte Signalpuls 30c beim Durchlauf der die Zahnlücke 56 flankierenden Strukturübergänge. Entsprechendes gilt für den zweiten Differenzialhallsensor, welcher die Spur S2 abtastet. Aufgrund der parallel zur Achse 4 verlaufenden Ausrichtung der die Zahnlücke 52 flankierenden Strukturübergange 19 und aufgrund der schräg zur Achse 4 verlaufenden Ausrichtung der die Zahnlücke 54 flankierenden Strukturübergange 19 erzeugen die beiden Differenzialhallsensoren in der Spur S1 und S2 den ersten Signalpuls 30a gleichzeitig, während der Differenzialhallsensor in der Spur S2 den Signalpuls 30b schneller ausgibt als der Differenzialhallsensor in der Spur S1. Der dritte Signalpuls 30c wird wieder zeitgleich erzeugt. In dem unterschiedlichen zeitlichen Abstand des zweiten Signalpulses 30b von dem ersten Signalpuls 30a in Spur S1 im Verhältnis zur Spur S2 ist eine Information über die axiale Verschiebungslage 6 des Kupplungsteils 3 enthalten, die beispielsweise mit einem Steuergerät oder einem der Sensoreinrichtung 25 zugeordneten elektronischen Schaltungsteil ausgewertet werden kann. Zu diesem Zweck können die beiden Sensorsignale Se der beiden Differenzialhallsensoren in der Spur S1 und S2 ausgewertet werden. Verschiebt sich nun die Geberstruktur in Fig. 7 entlang des axialen Verschiebungsrichtung 6, so ändert sich der Zeitabstand t1 zwischen den unverändert erfassten Signalpulsen 30a und den sich verschiebenden Signalpulsen 30b für beide Differenzialhallsensoren in unterschiedlicher Weise. Entsprechendes gilt für den Zeitabstand t2 zwischen den Signalpulsen 30b und 30c. Dabei ist vorteilhaft eine Bestimmung der axialen Verschiebungslage 6 durch Auswertung der beiden Sensorsignale der Differenzialhallsensoren schon unmittelbar nach dem Einschalten der Sensoreinrichtung 25 möglich, ohne dass diese zunächst eingelernt werden müsste. Die Erfassung der Drehzahl erfolgt in herkömmlicher Weise in Abhängigkeit von der Anzahl der in einem vorgebbaren Zeitintervall von einem Differenzialhallsensor erfassten Signalpulse oder in Abhängigkeit vom zeitlichen Abstand der Signalpulse. Dieses Ausführungsbeispiel ist besonders günstig herstellbar, da die Sensoreinrichtung 25 mit zwei preiswerten Differenzialhallsensoren auskommt und die Geberstruktur durch fräsen leicht und preiswert herstellbar ist.

Eine Abwandlung dieses Ausführungsbeispiels aus Fig. 7 sieht vor, dass nur ein einziger Differenzialhallsensor eingesetzt wird, beispielsweise derjenige, welcher im oberen Teil von Fig. 7 die Spur S1 abtastet und dabei beispielsweise das obere der beiden Sensorsignale Se im unteren Teil von Fig. 7 erzeugt. Bei einer axialen Verschiebung der Geberstruktur 7 tastet dieser Differenzialhallsensor dann beispielsweise die Spur S2 ab und erzeugt das untere der beiden Sensorsignale Se im unteren Teil von Fig. 7. Auch hier ist aus einer Veränderung des Zeitabstandes t1 im Verhältnis zu dem Zeitabstand t2 eine Information über den zurückgelegten axialen Verschiebungsweg 6 enthalten. In diesem Fall kann die Sensoreinrichtung 25 aber direkt nach dem Einschalten nicht erkennen, in welcher axialen Ausgangslage sich das bewegliche Kupplungsteil 3 befindet. Daher könnte in diesem Ausführungsbeispiel nach dem Einschalten der Sensoreinrichtung 25 zunächst eine Lernprozedur erfolgen, welche z.B. in der Software eines Steuergerätes hinterlegt werden kann. Um die Sensoreinrichtung 25 einzulernen, wird dann zunächst bei einer axialen Verschiebung 6 des Kupplungsteils 3 und der Geberstruktur 7 das Sensorsignal Se ausgewertet und eingelernt. Sobald erkannt wird, ob und wie weit sich bei einer axialen Verschiebung des Kupplungsteils nach links oder rechts in Fig. 1 der Zeitabstand t1 oder t2 in Fig. 7 vergrößert oder verkleinert, kann die Richtung und Größe der axialen Verschiebung in diesem Ausführungsbeispiel auch mit nur einem Sensorelement 5 richtig erkannt werden.

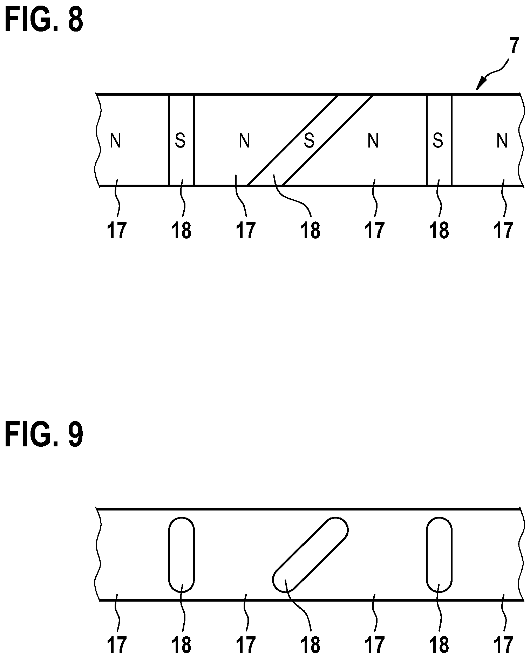

Es sind weitere Ausführungsbeispiele möglich, bei denen die in Umlaufrichtung 8 alternierend aufeinanderfolgenden Strukturelemente 17, 18 durch eine entsprechende Magnetisierung am Umfang 10 des drehbeweglichen Kupplungsteils 3 ausgebildet werden. Hierbei können Strukturübergänge 19 zwischen der ersten Teilstruktur 14 und der zweiten Teilstruktur 15 vorzugsweise durch magnetische Nord-Süd-Übergänge gebildet werden. Das Sensorelement 5 kann als magnetfeldempfindliches Sensorelement ausgebildet sein, beispielsweise als Hall-Element, dass eine Magnetfeldänderung im Sensor-Erfassungsbereich 9 erfasst, wenn ein magnetischer Nord-Süd-Übergang an dem Sensorelement 5 vorbeigeführt wird. Ein Ausführungsbeispiel für eine magnetische Geberstruktur 7 ist in Fig. 8 offenbart. Die Struktur entspricht der im oberen Teil von Fig. 7 dargestellten Geberstruktur, nur dass hier im Unterschied zur Fig. 7 magnetische Nordpole N die Strukturelemente 17 der ersten Teilstruktur und magnetische Südpole S die Strukturelemente 18 der zweiten Teilstruktur bilden. Auch in diesem Ausführungsbeispiel können beispielsweise ein oder zwei Differentialhallsensoren eingesetzt werden. Die Signalauswertung erfolgt dann ähnlich zu der anhand der Figur 7 beschriebenen Auswertung.

Fig. 9 zeigt eine zum oberen Teil von Fig. 7 ähnliche Geberstruktur 7, welche durch Ausstanzen von Material in einem Blechstreifen hergestellt ist. Der Blechstreifen wird anschließend um den Umfang 10 des Kupplungsteils 3 gebogen. Die Auswertung und die Signalerfassung können ähnlich zu der anhand der Fig. 7 beschriebenen Ausführungsform durchgeführt werden.

Es ist aber auch möglich, die in Umlaufrichtung alternierend aufeinanderfolgenden Strukturelemente 17,18 der beiden Teilstrukturen durch eine Gestaltung der optischen Oberflächenbeschaffenheit des Umfangs 10 des drehbeweglichen Teils 3 darzustellen. In diesem Fall ist die Geberstruktur 7 beispielsweise eine Flächenstruktur und die erste Teilstruktur 14 und die zweite Teilstruktur 15 werden durch eine optisch unterschiedliche Oberfläche eines beispielsweise zylindermantelförmigen Umfangs 10 gebildet. Das Sensorelement 5 ist dann als optisches Sensorelement ausgebildet, das im Sensor-Erfassungsbereich 9 von der Oberfläche reflektierte elektromagnetische Strahlung, insbesondere Licht, erfasst. Dies kann z.B. ein Laser sein. Die unterschiedlich reflektierenden Oberflächen ermöglichen die Erfassung eines Strukturübergangs 19 von einem Strukturelement der ersten Teilstruktur zu einem Strukturelement der zweiten Teilstruktur.

Es versteht sich, dass innerhalb des Offenbarungsgehalts der Erfindung zahlreiche Möglichkeiten zur Ausgestaltung der Geberstruktur 7 und der Sensoreinrichtung 25 bestehen, die von den oben dargestellten Ausführungsbeispielen abweichen können, ohne den erfinderischen Grundgedanken zu verlassen.

## Patentansprüche

1. Kupplungssensorsystem mit einem um eine Drehachse (4) drehbeweglichen und in Richtung der Drehachse axial verschiebbaren Kupplungsteil (3) und einer Sensoreinrichtung (25) mit wenigstens einem Sensorelement (5), welches ausgebildet ist, um eine Drehbewegungsgröße des drehbeweglichen Kupplungsteils (3) zu erfassen, wobei das drehbewegliche Kupplungsteil (3) an seinem Umfang (10) mit einer umlaufenden Geberstruktur (7) versehen ist, die in Umlaufrichtung (8) alternierend aufeinanderfolgende Strukturelemente (17, 18) einer ersten Teilstruktur (14) und wenigstens einer zweiten Teilstruktur (15) aufweist, die jeweils durch Strukturübergänge (19) getrennt sind, wobei bei einer Drehung des drehbeweglichen Kupplungsteils (3), die Strukturübergänge (19) an einem Sensor-Erfassungsbereich (9) des wenigstens einen Sensorelementes (5) vorbeigeführt werden und die Sensoreinrichtung (25) in Abhängigkeit von der Erfassung der vorbeigeführten Strukturübergänge (19) ein Sensorsignal (Se) erzeugt, dass eine Information über die Drehbewegungsgröße des drehbeweglichen Kupplungsteils (3) enthält, wobei der Umfangsabstand (A1, A2) eines von der Sensoreinrichtung (25) bei einer Drehbewegung des drehbeweglichen Kupplungsteils (3) erfassten Strukturübergangs (19a) von einem in Umlaufrichtung (8) unmittelbar oder mittelbar nachfolgenden, von der Sensoreinrichtung (25) erfassten Strukturübergang (19b) abhängig von der axialen Verschiebung (6) des drehbeweglichen Kupplungsteils (3) ist, so dass die Sensoreinrichtung (25) ein Sensorsignal (Se) erzeugt, das zusätzlich zu der Information über die Drehbewegungsgröße des drehbeweglichen Kupplungsteils (3) eine Information über die axiale Verschiebungslage des Kupplungsteils (3) enthält, **dadurch gekennzeichnet, dass** die Sensoreinrichtung (25) ein Sensorsignal (Se) erzeugt, das in Abhängigkeit von der Erfassung der vorbeigeführten Strukturübergänge (19) eine Folge von Signalpulsen (30) aufweist und dass in Abhängigkeit von der Anzahl der in einem vorgebbaren Zeitintervall erfassten Signalpulse (30) oder in Abhängigkeit vom zeitlichen Abstand der Signalpulse (30) ein die Drehbewegungsgröße repräsentierender Wert erfasst wird.

2. Kupplungssensorsystem nach Anspruch 1, **dadurch gekennzeichnet, dass** wenigstens ein Strukturübergang (19a) einen gegenüber der Drehachse (4) des drehbeweglichen Kupplungsteils (3) schräg gestellten Schrägstellungsabschnitt (19s) aufweist und ein in Umlaufrichtung (8) unmittelbar oder mittelbar nachfolgender Strukturübergang (19a) einen zu dem Schrägstellungsabschnitt (19s) nicht parallel verlaufenden Abschnitt aufweist.

3. Kupplungssensorsystem nach Anspruch 1 oder 2, **dadurch gekennzeichnet, dass** die erste Teilstruktur (14) und/oder die zweite Teilstruktur (15) aus einer Folge von gleichartig ausgebildeten Strukturelementen (17, 18) oder aus einer Folge von unterschiedlich ausgebildeten und in Umlaufrichtrung (8) alternierend angeordneten Strukturelementen (17, 18) gebildet wird.

4. Kupplungssensorsystem nach Anspruch 1, **dadurch gekennzeichnet, dass** die Sensoreinrichtung (25) ein einziges Sensorelement (5) aufweist oder wenigstens zwei in Richtung der Drehachse (4) beabstandet voneinander angeordnete Sensorelemente (5) aufweist.

5. Kupplungssensorsystem nach Anspruch 4, **dadurch gekennzeichnet, dass** die Sensoreinrichtung (25) wenigstens eines der folgenden Sensorelemente aufweist: einen Differenzialhallsensor, einen Hallsensor oder einen Hall-IC, einen AMR-Sensor oder GMR-Sensor, ein induktives Sensorelement, einen optischen Sensor, einen Ultraschallsensor oder einen Radar-Sensor.

6. Kupplungssensorsystem nach Anspruch 6, **dadurch gekennzeichnet, dass** das Sensorsignal (Se) eine Sequenz von wenigstens drei aufeinanderfolgenden Signalpulsen (30) aus einem ersten Signalpuls (30a), einem zweiten Signalpuls (30b) und einem dritten Signalpuls (30c) enthält und dass das Verhältnis des zeitlichen Abstandes (t1) des ersten Signalpulses (30a) von dem zweiten Signalpuls (30b) und des zeitlichen Abstandes (t2) des zweiten Signalpulses (30b) von dem dritten Signalpuls (30c) eine Information über die axiale Verschiebungslage des drehbeweglichen Kupplungsteils (3) enthält.

7. Kupplungssensorsystem nach Anspruch 6, **dadurch gekennzeichnet, dass** das Verhältnis der Pulsdauer (ts) eines Signalpulses (30) des Sensorsignals (Se) zur Periodendauer (tp) des Sensorsignals (Se) eine Information über die axiale Verschiebungslage des drehbeweglichen Kupplungsteils (3) enthält.

8. Kupplungssensorsystem nach Anspruch 1, **dadurch gekennzeichnet, dass** die in Umlaufrichtung (8) alternierend aufeinanderfolgende Strukturelemente (17, 18) durch eine geometrische Gestaltung des Umfangs (10) des drehbeweglichen Kupplungsteils (3) in der Art einer Zahnradgeometrie gebildet werden, wobei die erste Teilstruktur (14) Zähne (40) als Strukturelemente und die zweite Teilstruktur (15) jeweils zwischen zwei Zähnen befindliche Zahnlücken (41) als Strukturelemente aufweist, und dass im Sensor-Erfassungsbereich (9) des wenigstens einen Sensorelementes (5) ein Magnetfeld vorgesehen ist und die Sensoreinrichtung (25) eine Magnetfeldänderung erfasst, wenn Zähne (40) und Zahnlücken (41) an dem Sensor-Erfassungsbereich (9) des wenigstens einen Sensorelementes (5) der Sensoreinrichtung (25) vorbeigeführt werden.

9. Kupplungssensorsystem nach Anspruch 1, **dadurch gekennzeichnet, dass** die in Umlaufrichtung (8) alternierend aufeinanderfolgenden Strukturelemente (17, 18) durch eine magnetische Polstruktur am Umfang (10) des drehbeweglichen Kupplungsteils (3) ausgebildet werden, wobei die Strukturübergänge (19) zwischen der ersten und der zweiten Teilstruktur (14,15) durch magnetische Nord-Süd-Übergänge gebildet werden und dass die Sensoreinrichtung eine Magnetfeldänderung erfasst, wenn ein magnetischer Nord-Süd-Übergang an dem Sensor-Erfassungsbereich (25) des wenigstens einen Sensorelementes (5) vorbeigeführt wird.

10. Kupplungssensorsystem nach Anspruch 1, **dadurch gekennzeichnet, dass** die in Umlaufrichtung (8) alternierend aufeinanderfolgenden Strukturelemente (17,18) durch eine Gestaltung der optischen Oberflächenbeschaffenheit des Umfangs (10) des drehbeweglichen Teils (3) ausgeführt sind, wobei die erste Teilstruktur (14) und die zweite Teilstruktur (15) eine optisch unterschiedliche Oberfläche aufweisen, und dass die Senorseinrichtung (25) wenigstens ein als optisches Sensorelement ausgebildetes Sensorelement (5) aufweist, das im Sensor-Erfassungsbereich (9) von der Oberfläche reflektierte elektromagnetische Strahlung, insbesondere Licht, erfassen kann.

11. Kupplungssensorsystem nach Anspruch 1, **dadurch gekennzeichnet, dass** das Kupplungssensorsystem (1) Teil einer Kraftfahrzeuggetriebekupplung oder Teil einer die Antriebsseite mit der Abtriebsseite verbindenden Trennkupplung des Kraftfahrzeuges ist.

## Claims

1. Clutch sensor system comprising a clutch part (3), which can rotate about a rotation axis (4) and can be axially displaced in the direction of the rotation axis, and a sensor device (25) having at least one sensor element (5) which is designed to detect a rotational movement variable of the rotatable clutch part (3), wherein the rotatable clutch part (3) is provided, on its circumference (10), with a circumferential transmitter structure (7) which has structure elements (17, 18) of a first substructure (14) and at least one second substructure (15), which structure elements follow one another in an alternating manner in the rotation direction (8) and are separated by structure transitions (19) in each case, wherein, in the event of rotation of the rotatable clutch part (3), the structure transitions (19) are routed past a sensor detection region (9) of the at least one sensor element (5), and the sensor device (25) generates a sensor signal (Se) depending on the detection of the structure transitions (19) which are routed past, that contains information about the rotational movement variable of the rotary clutch part (3), wherein the circumferential distance (A1, A2) of a structure transition (19a) which is detected by the sensor device (25) in the event of a rotational movement of the rotatable clutch part (3) from a structure transition (19b) which directly or indirectly follows in the rotation direction (8) and is detected by the sensor device (25) is dependent on the axial displacement (6) of the rotatable clutch part (3), so that the sensor device (25) generates a sensor signal (Se) which, in addition to the information about the rotational movement variable of the rotatable clutch part (3), contains information about the axial displacement position of the clutch part (3), **characterized in that** the sensor device (25) generates a sensor signal (Se) which has a series of signal pulses (30) depending on the detection of the structure transitions (19) which are routed past and **in that** a value which represents the rotational movement variable is detected depending on the number of signal pulses (30) detected in a prespecifiable time interval or depending on the time interval between the signal pulses (30).

2. Clutch sensor system according to Claim 1, **characterized in that** at least one structure transition (19a) has an inclined section (19s) which is inclined in relation to the rotation axis (4) of the rotatable clutch part (3), and a structure transition (19a) which directly or indirectly follows in the rotation direction (8) has a section which does not run parallel in relation to the inclined section (19s).

3. Clutch sensor system according to Claim 1 or 2, **characterized in that** the first substructure (14) and/or the second substructure (15) are/is formed from a series of structure elements (17, 18) of identical design or from a series of structure elements (17, 18) of different design which are arranged in an alternating manner in the rotation direction (8).

4. Clutch sensor system according to Claim 1, **characterized in that** the sensor device (25) has a single sensor element (5) or has at least two sensor elements (5) which are arranged at a distance from one another in the direction of the rotation axis (4).

5. Clutch sensor system according to Claim 4, **characterized in that** the sensor device (25) has at least one of the following sensor elements: a differential Hall sensor, a Hall sensor or a Hall IC, an AMR sensor or GMR sensor, an inductive sensor element, an optical sensor, an ultrasound sensor or a radar sensor.

6. Clutch sensor system according to Claim 6, **characterized in that** the sensor signal (Se) contains a sequence of at least three successive signal pulses (30) comprising a first signal pulse (30a), a second signal pulse (30b) and a third signal pulse (30c), and **in that** the ratio of the time interval (t1) between the first signal pulse (30a) and the second signal pulse (30b) and of the time interval (t2) between the second signal pulse (30b) and the third signal pulse (30c) contains information about the axial displacement position of the rotatable clutch part (3).

7. Clutch sensor system according to Claim 6, **characterized in that** the ratio of the pulse duration (ts) of a signal pulse (30) of the sensor signal (Se) to the period duration (tp) of the sensor signal (Se) contains information about the axial displacement position of the rotatable clutch part (3).

8. Clutch sensor system according to Claim 1, **characterized in that** the structure elements (17, 18) which follow one another in an alternating manner in the rotation direction (8) are formed by a geometric design of the circumference (10) of the rotatable clutch part (3) in the manner of a gearwheel geometry, wherein the first substructure (14) has teeth (40) as structure elements and the second substructure (15) has tooth gaps (41), which are situated between two teeth in each case, as structure elements, and **in that** a magnetic field is provided in the sensor detection region (9) of the at least one sensor element (5), and the sensor device (25) detects a change in magnetic field when teeth (40) and tooth gaps (41) are routed past the sensor detection region (9) of the at least one sensor element (5) of the sensor device (25).

9. Clutch sensor system according to Claim 1, **characterized in that** the structure elements (17, 18) which follow one another in an alternating manner in the rotation direction (8) are formed by a magnetic pole structure on the circumference (10) of the rotatable clutch part (3), wherein the structure transitions (19) are formed between the first and the second substructure (14, 15) by magnetic north/south transitions, and **in that** the sensor device detects a change in magnetic field when a magnetic north/south transition is routed past the sensor detection region (25) of the at least one sensor element (5).

10. Clutch sensor system according to Claim 1, **characterized in that** the structure elements (17, 18) which follow one another in an alternating manner in the rotation direction (8) are realized by a design of the optical surface condition of the circumference (10) of the rotatable part (3), wherein the first substructure (14) and the second substructure (15) have an optically different surface, and **in that** the sensor device (25) has at least one sensor element (5) which is in the form of an optical sensor element and, in the sensor detection region (9), can detect electromagnetic radiation, in particular light, which is reflected from the surface.

11. Clutch sensor system according to Claim 1, **characterized in that** the clutch sensor system (1) is part of a motor vehicle transmission clutch or part of a separating clutch of the motor vehicle, which separating clutch connects the drive side to the output side.

## Revendications

1. Système de capteur d'embrayage présentant une partie d'embrayage (3) apte à se déplacer en rotation autour d'un axe de rotation (4) et à se déplacer axialement dans la direction de l'axe de rotation et un dispositif de capteur (25) qui présente au moins un élément de capteur (5) configuré pour détecter le niveau du déplacement de rotation de la partie d'embrayage (3) mobile en rotation,
la partie d'embrayage (3) mobile en rotation étant dotée à sa périphérie (10) d'une structure périphérique de capteur (7) qui présente des éléments structurels (17, 18) d'une première structure partielle (14) et d'au moins une deuxième structure partielle (15) qui se suivent en alternance dans la direction périphérique (8) et qui sont séparées les unes des autres par des transitions structurelles (19),
les transitions structurelles (19) passant lors d'une rotation de la partie d'embrayage (3) mobile en rotation devant une partie (9) de saisie du ou des éléments de capteur (5),
le dispositif de capteur (25) formant en fonction de la saisie des transitions structurelles (19) passant devant lui un signal de capteur (Se) que contient une information concernant le niveau de déplacement en rotation de la partie d'embrayage (3) mobile en rotation,
la distance périphérique (A1, A2) d'une transition structurelle (19a) saisie par le dispositif de capteur (25) lors d'un déplacement de rotation de la partie d'embrayage (3) mobile en rotation par rapport à une transition structurelle (19b) qui la suit directement ou indirectement dans la direction périphérique (8) et saisie par le dispositif de capteur (25) dépendant du déplacement axial (6) de la partie d'embrayage (3) mobile en rotation, de telle sorte que le dispositif de capteur (25) forme un signal de capteur (Se) qui, en plus de l'information concernant le niveau de déplacement en rotation de la partie d'embrayage (3) mobile en rotation, contient une information concernant la position de déplacement axial de la partie d'embrayage (3),
**caractérisé en ce que**
le dispositif de capteur (25) forme un signal de capteur (Se) qui présente une succession de signaux (30) pulsés en fonction de la détection des transitions structurelles (19) passant devant lui et
**en ce qu'**une valeur qui représente la grandeur du déplacement de rotation est saisie en fonction du nombre des signaux pulsés (30) saisis dans un intervalle de temps prédéterminé ou en fonction de l'écart temporel entre les signaux pulsés (30).

2. Système de capteur d'embrayage selon la revendication 1, **caractérisé en ce qu'**au moins une transition structurelle (19a) présente une partie (19s) de position oblique, disposée obliquement par rapport à l'axe de rotation (4) de la partie d'embrayage (3) mobile en rotation et une transition structurelle (19a) qui la suit directement ou indirectement dans la direction périphérique (8) présente une section qui ne s'étend pas en parallèle par rapport à la section (19s) disposée obliquement.

3. Système de capteur d'embrayage selon les revendications 1 ou 2, **caractérisé en ce que** la première structure partielle (14) et/ou la deuxième structure partielle (15) sont formées d'une succession d'éléments structurels (17, 18) de configuration identique ou d'une succession d'éléments structurels (17, 18) configurés différemment et disposés en alternance dans la direction périphérique (8).

4. Système de capteur d'embrayage selon la revendication 1, **caractérisé en ce que** le dispositif de capteur (25) présente un seul élément de capteur (5) ou au moins deux éléments de capteur (5) disposés à distance mutuelle dans la direction de l'axe de rotation (4).

5. Système de capteur d'embrayage selon la revendication 4, **caractérisé en ce que** le dispositif de capteur (25) présente au moins l'un des éléments de capteur suivants : un capteur différentiel de Hall, un capteur de Hall ou un Hall-IC, un capteur AMR ou un capteur GMR, un élément de capteur inductif, un capteur optique, un capteur d'ultrasons ou un capteur radar.

6. Système de capteur d'embrayage selon la revendication 6, **caractérisé en ce que** le signal de capteur (Se) contient une succession d'au moins trois signaux pulsés successifs (30) constitués d'un premier signal pulsé (30a), d'un deuxième signal pulsé (30b) et d'un troisième signal pulsé (30c) et **en ce que** le rapport entre l'écart temporel (t1) entre le premier signal pulsé (30a) et le deuxième signal pulsé (30b) et l'écart temporel (t2) entre le deuxième signal pulsé (30b) et le troisième signal pulsé (30c) contient une information concernant la position en décalage axial de la partie d'embrayage (3) mobile en rotation.

7. Système de capteur d'embrayage selon la revendication 6, **caractérisé en ce que** le rapport entre la durée (ts) d'impulsion d'un signal pulsé (30) du signal de capteur (Se) par rapport à la durée (tp) de la période du signal de capteur (Se) contient une information concernant la position de décalage axial de la partie d'embrayage (3) mobile en rotation.

8. Système de capteur d'embrayage selon la revendication 1, **caractérisé en ce que** les éléments structurels (17, 18) qui se succèdent en alternance dans la direction périphérique (8) sont formés par une configuration géométrique de la périphérie (10) de la partie d'embrayage (3) mobile en rotation, à la manière d'une géométrie de roue dentée, la première structure partielle (14) contenant des dents (40) servant d'éléments structurels et la deuxième structure partielle (15) contenant des interstices (41) inter-dentaires situés entre deux dents et servant d'éléments structurels et **en ce que** dans la zone de saisie (9) du ou des éléments de capteur (5) est prévu un champ magnétique, le dispositif de capteur (25) saisissant une modification du champ magnétique si des dents (40) et des interstices inter-dentaires (41) passent devant la zone de saisie (9) du ou des éléments de capteur (5) du dispositif de capteur (25).

9. Système de capteur d'embrayage selon la revendication 1, **caractérisé en ce que** les éléments structurels (17, 18) qui se succèdent en alternance dans la direction périphérique (8) sont formés par une structure polaire magnétique prévue à la périphérie (10) de la partie d'embrayage (3) mobile en rotation, les transitions structurelles (19) entre la première et la deuxième structure partielle (14, 15) étant formées par des transitions magnétiques Nord-Sud et **en ce que** le dispositif de capteur saisit une modification de champ magnétique lorsqu'une transition magnétique Nord-Sud passe devant la zone de détection (25) du ou des éléments de capteur (5).

10. Système de capteur d'embrayage selon la revendication 1, **caractérisé en ce que** les éléments structurels (17, 18) qui se succèdent en alternance dans la direction périphérique (8) sont formés par la configuration de la nature optique de la surface de la périphérie (10) de la partie (3) mobile en rotation, la première structure partielle (14) et la deuxième structure partielle (15) présentant des surfaces différant optiquement et **en ce que** le dispositif de capteur (25) présente au moins un élément de capteur (5) configuré comme élément de capteur optique qui peut détecter le rayonnement électromagnétique, en particulier la lumière, réfléchi par la surface dans la zone (9) de détection du capteur.

11. Système de capteur d'embrayage selon la revendication 1, **caractérisé en ce que** le système (1) de capteur d'embrayage fait partie d'un embrayage de transmission de véhicule automobile ou d'un embrayage de séparation du véhicule automobile qui relie le côté d'entraînement au côté entraîné.
